# EUROPEAN PATENT APPLICATION

(11) **EP 1 631 081 A2**
(43) Date of publication of application: **01.03.2006**
(21) Application number: 05255177.7
(22) Date of filing: 23.08.2005
(51) Int. Cl.: H04N 5/64

(54) **Liquid crystal television including locking means for cover member**

(30) Priority: 27.08.2004 JP 2004249110
(71) Applicant: ORION ELECTRIC CO., Ltd., Takefu-City, Fukui 915-8555 (JP)
(72) Inventor: Uchizono, Tatsuya, Takefu-city Fukui 915-8555 (JP)
(74) Representative: Paget, Hugh Charles Edward

(57) **Abstract**

The invention provides a liquid crystal television excellent in beauty, thin and suitable for a stand type and a wall hanging type by realizing engaging means for a cover member, which are easy to attach and detach and difficult to remove by an external force. In order to prevent the locking claw parts 42 and 52, which lock the cover member 6 that covers cords 8 connected to input and output terminals 7 disposed at the stepped recessed part 11 of the back casing 5, from retreating and removing, restraining walls 20 for restraining the above described locking claw parts 42 and 52 from retreating are provided at the back casing 5 side.

## Description

### BACKGROUND OF THE INVENTION

### Field of the Invention

The present invention relates to a liquid crystal television in a liquid crystal television which is thin and can be utilized as a stand type and a wall hanging type, which especially organizes positions of connecting cords, which easily become untidy, by unifying positions, where a number of cords for connecting the liquid crystal television and a number of external home electric devices are connected to input and output terminals and led out, to be downward at a lower side of the above described liquid crystal television, is provided with a wide cover member which covers connecting parts of a number of these cords to protect the connecting parts and enhance beauty of the television, and includes locking means for the cover member which can be detached and attached by a simple and easy operation when attaching and detaching the cover member, and which does not easily remove even if an unexpected external force is applied after the wide and bendable cover member is mounted.

### Description of the Related Art

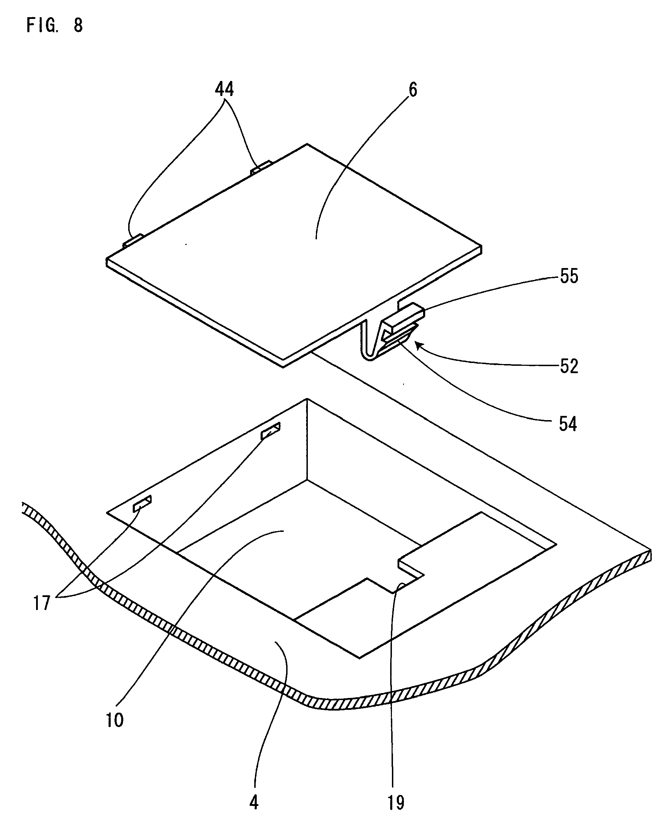

Conventionally, for a container which houses things and a cover member which covers it, a method for locking them by engaging a locking claw part and a locking hole is frequently used. As for the locking method of such a container and the cover member, for example, the following prior art is known. In the Japanese Utility Model Laid-Open No. 52-34041 (Patent Document 1), a casing 4 of a battery case which houses a dry battery not shown and a planar cover member 6 which covers this are included as shown in FIG. 8. A recessed part 10, which houses the above described battery, is included in the above described casing 4, and engaging holes 17 in which insertion pieces 44 which are formed at two spots at one end side of the above described cover member 6 are opened in an upper edge of one end side of the recesses part 10, so that the above described insertion pieces 44 can be fitted into the above described holes 17 to be locked; and a hook piece 54 which is formed at a part of a U-shaped locking claw member 52 that is projected in a substantially U-shape to have a spring characteristic is disposed at the other end side of the above described cover member 6, and an engaging groove 19 which engages with the above described hook piece 54 is formed at an upper edge of the other end side of the above described recessed part 10 so that they are detachably engaged with each other by manipulating a tip end part side of the above described U shape with a finger tip.

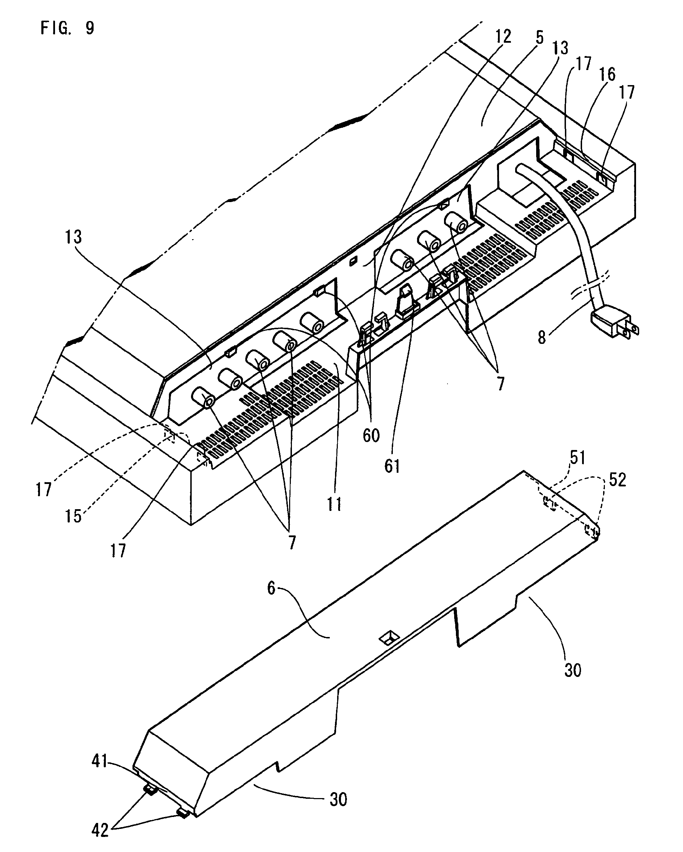

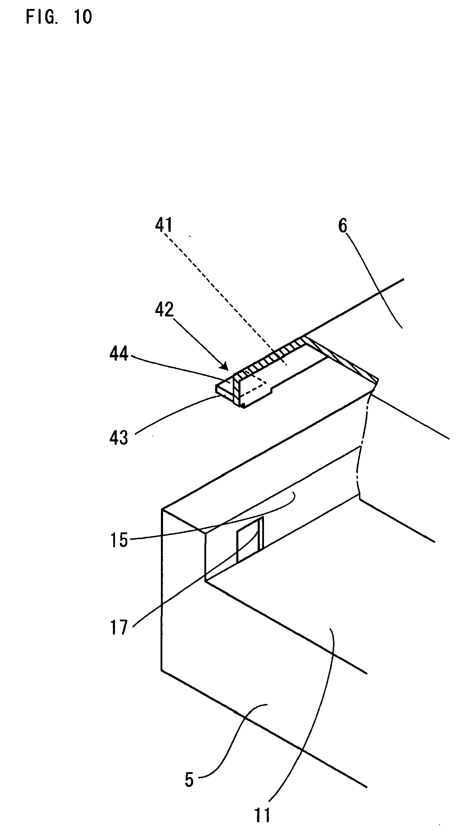

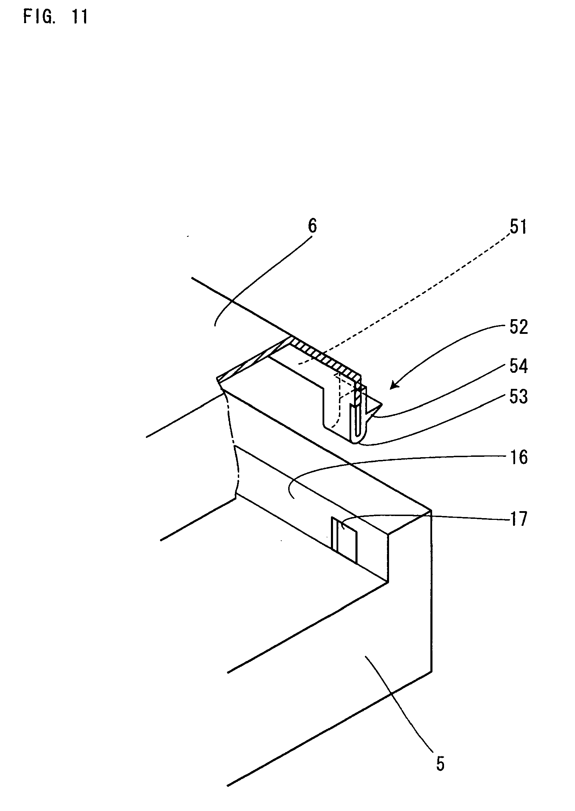

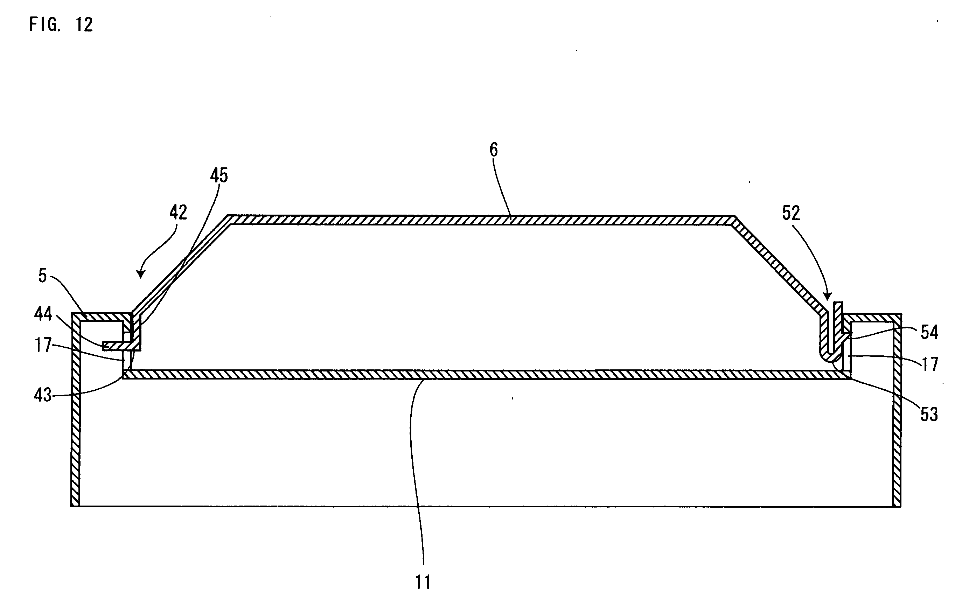

Besides, in the conventional liquid crystal television, a back casing 5 shown in FIG. 9 is disposed at a back surface of a casing in which a liquid crystal display is disposed on a front surface, and an oblong cover member 6 is mounted to a lower side of the above described back casing 5. A plurality of input and output terminals 7, which makes it possible to connect to external electronic devices not shown and an electric power supply cord 8 are disposed downward on a downward wall surface 12 of a stepped recessed part 11 formed at a lower side of the above described back casing 5. Between the above described stepped recessed part 11 and the lower end edge of the cover member 6, cord drawing spaces 30 which make it possible to lead cords, which are not shown and connected to the above described terminals 7, downward, are formed by notching the lower end edge of the cover member 6. Locking means for the cover member 6 which are mounted at the lower side of the above described back casing 5 will be explained according to FIG. 10. FIG. 10 is a perspective view including a partial section of enlarged left sides of the back casing 5 and the cover member 6 shown in FIG. 9. An L-shaped locking claw part 42 is formed at one end side 41 of the above described oblong cover member 6 shown in FIG. 10, and the engaging hole 17 which engages with the insertion piece 44 of the above described L-shaped locking claw part 42 is opened in a wall surface 15 at one end side of the above described stepped recessed part 11. FIG. 11 is a perspective view including a partial section of enlarged right sides of the back casing 5 and the cover member 6 shown in FIG. 9. The U-shaped locking claw part 52 is formed at the other end side 51 of the above described cover member 6 shown in FIG. 11, the engaging hole 17 which engages with the hook piece 54 of the locking claw part 52 is opened in the wall surface 16 at the other end side of the above described stepped recessed part 11, and the above described cover member 6 is locked at the back casing 5 as shown in a sectional view in FIG. 12.

According to the prior art of the above described Patent Document 1, two engaging holes 17 are opened in the upper edge of one end side of the recessed part 10 of the battery case casing 4 which houses a dry battery or the like, and the insertion pieces 44 which are formed at two spots at the one end side of the planar cover member 6 which covers the opening are fitted in the engaging holes and locked. Besides, the U-shaped locking claw part 52 given the spring characteristic is disposed at the other end side of the cover member 6, the hook piece 54 is formed at a part of it, while the engaging groove 19 is formed at the upper edge of the other end side of the recessed part 10 of the above described battery case casing 4, and the above described hook piece 54 and the above described engaging groove 19 are engaged with each other and locked. According to the locking structure provided at both end sides of the cover member 6 like this, in such a size as the cover member 6 of the battery case which is small and has no fear of bending, even if the cover member 6 bends, the substantially U-shaped hook piece 54 given the spring characteristic is pressed against it, and therefore, there is no fear that the above-described insertion pieces 44 and the above described hook piece 54 are detached, but when this cover member 6 and the locking structure accompanying the cover member 6 are made larger as they are to cover the back surface of the liquid crystal television in the width direction, the above described planar cover member 6 easily bends significantly, and therefore, there arises the problem that the insertion pieces 44 and the hook piece 54 do not reach the engaging holes 17 and remove.

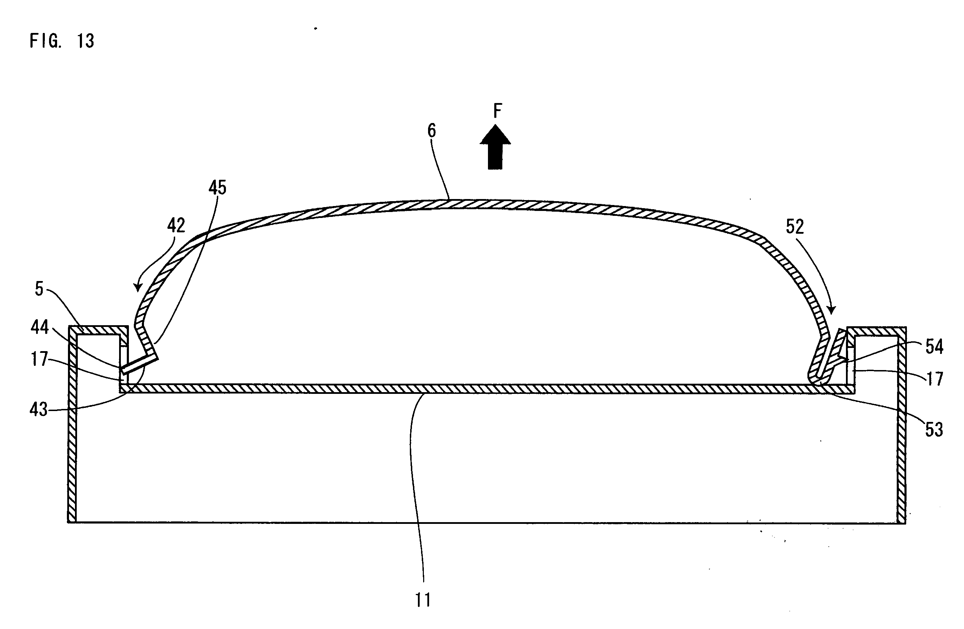

Besides, in the locking means for mounting the oblong cover member to the back casing of the above described liquid crystal television shown in FIG. 9, at the time of mounting the cover member 6 to the back casing 5, mounting can be performed by the simple step of fitting the insertion pieces 44 of the L-shaped locking claw parts 42 of the above described cover member 6 into the above described engaging holes 17 first, and subsequently fitting the above described U-shaped locking claw parts 52 into the engaging holes 17. However, when an external force (F) works in the rear side direction of the above described liquid crystal television, that is, in the arrow direction in FIG. 13, with respect to the cover member 6, there arises the problem that the above described cover member 6 which is oblong and easy to bends is bent significantly to the above described rear side and the insertion pieces 44 of the above described L-shaped locking claw part 42 and the hook pieces 54 of the above described U-shaped locking claw part 52 easily remove from the engaging holes 17.

### SUMMARY OF THE INVENTION

The present invention has an object to solve the problem that when the locking structure of the planar cover member such as the battery case in the above described Patent Document 1 is directly applied to the cover member of the casing back surface of the liquid crystal television, the above described cover member easily bends and the insertion pieces and the hook pieces easily remove, and the problem that the oblong cover member easy to bend, which covers the lead-out part of the cords connected to a plurality of input and output terminals and the power supply cord, which is provided downward at the lower side of the back casing in the liquid crystal television, removes by an unexpected external force (F), and to provide a liquid crystal television which is thin and suitable for a stand type and a wall hanging type by organizing the dispositions of the above described connecting cords, which easily become untidy, by unifying the lead-out positions of a plurality of cords to be downward at the lower side of the above described liquid crystal television to make connection with a plurality of external home electric devices possible, by providing a wide cover member for covering the connecting parts of these plurality of cords to protect the connecting parts and enhance beauty of the television, and by including locking means for the cover member which can be detached and attached by a simple and easy operation when attaching and detaching the cover member and does not easily remove even if an unexpected external force (F) is applied after the cover member which is oblong and easily bends is mounted.

In a liquid crystal television including locking means for a cover member according to claim 1, in a liquid crystal television including a liquid crystal display part disposed at a front surface of a casing, a stand attachable and detachable in a bottom surface of the aforesaid casing, a back casing with an oblong stepped recessed part formed at a lower side, a plurality of input and output terminals and/or a power supply cord which are led out to an outside from open windows opened in a downward wall surface of the aforesaid stepped recessed part, a cover member for covering the aforesaid stepped recessed part, and locking means integrally formed at the aforesaid cover member to detachably lock the cover member and the aforesaid back casing, characterized in that the aforesaid locking means is constituted of a plurality of locking claw parts formed integrally with the cover member to project to lateral wall surface sides of the aforesaid stepped recessed part from both lateral ends of the aforesaid cover member, and a plurality of engaging holes formed in the aforesaid stepped recessed part to correspond to the locking claw parts, and restraining walls for restraining movement of the aforesaid locking claw part in an engagement releasing direction after engagement of the aforesaid locking claw parts and the aforesaid engaging holes are integrally formed at the aforesaid stepped recessed part.

According to claim 1, in the liquid crystal television including the locking means for the cover member, the locking means for the above described cover member is constituted of a plurality of locking claw parts formed integrally with the cover member to project to both lateral wall surface sides of the stepped recessed part of the back casing from both lateral ends of the above described cover member, and a plurality of engaging holes which are formed at the above described stepped recessed part to correspond to the locking claw parts, the locking means which locks the above described cover member at the above described back casing by the above described locking claw parts being fitted into the above described engaging holes to be engaged is included. Besides, the restraining walls for restraining the movement of the above described locking claw parts in the engagement releasing direction after engagement of the above described locking claw parts and the above described engaging holes are integrally formed at the above described stepped recessed part, and thereby, even when the cover member which covers the above described stepped recessed part, is oblong and easily bends is bent by unexpectedly receiving an external force and the above described locking claw parts are almost removed, the above described restraining wall restrains the movement and can prevent slipping off of the locking claw parts.

The liquid crystal television including the locking means for the cover member according to claim 2 of the present invention is, in the liquid crystal television including the locking means for the cover member according to claim 1, characterized in that the aforesaid locking claw part is constructed by an L-shaped insertion piece formed at one end side of the aforesaid cover member, and a U-shaped hook piece formed at the other end side of the aforesaid cover member and has a spring characteristic, these insertion piece and hook piece are disposed at least near a lower end edge of the aforesaid cover member, the aforesaid engaging hole in which the aforesaid insertion piece is inserted to catch one end of the aforesaid cover member, and the aforesaid engaging hole which is locked at the hook piece to fix the cover member are formed in raised walls of the aforesaid stepped recessed part, and the aforesaid restraining walls are integrally formed to oppose the raised wall.

According to the construction of claim 2, the above described locking claw parts are the L-shaped locking claw part at one end side of the above described cover member with insertion pieces formed, and the U-shaped locking claw part having the spring characteristic at the other end side with the hook pieces formed, whereby when the cover member is mounted to the above described back casing, the insertion pieces of the above described L-shaped locking claw part are fitted into the above described engaging holes first, then the hook pieces of the above described U-shaped locking claw part are fitted, and thereby, the U-shaped locking claw part having the spring characteristic is in pressure contact with the edge surfaces of the above described engaging holes to maintain engagement, while when the above described cover member is detached, detachment is possible by releasing the engagement of the hook pieces at the above described U-shaped locking claw part side first and thereafter, releasing the engagement of the insertion pieces of the above described L-shaped locking claw part. Besides, the insertion piece and the hook piece are disposed at least near to the lower end edge of the above described cover member, the above described engaging hole in which the above described insertion piece is inserted to catch one end of the above described cover member and the above described engaging hole which locks at the hook piece to fix the cover member are formed in the raised wall of the above described stepped recessed part, and the above described restraining wall is integrally formed to oppose the raised wall, whereby even when the area near to the lower end of the cover member which is oblong and especially easily bends is bent by unexpectedly receiving an external force and the above described locking claw part almost removes, the restraining wall formed at the back surface side of the above described locking claw part to oppose the above described raised wall restrains the movement, whereby the locking claw part can be prevented from removing from the engaging hole.

The liquid crystal television including the locking means for the cover member in claim 3 of the present invention is, in the liquid crystal television including the locking means for the cover member according to claim 2, characterized in that height of the aforesaid restraining wall substantially corresponds to height of an upper part of the aforesaid engaging hole, a back surface plate is formed on a back surface of the aforesaid L-shaped insertion piece, the aforesaid insertion piece is formed to be longer than a space between the aforesaid restraining wall and the aforesaid back surface plate, and the aforesaid hook piece is formed to be longer than a space between the aforesaid restraining wall and a back surface of the aforesaid U-shape.

According to the construction of claim 3, the height of the above described restraining wall substantially corresponds to the height of the upper part of the above described engaging hole, and thereby, when the cover member is in the locked state, the above described insertion piece and the above described hook piece can be locked. Besides, in the above described L-shaped locking claw part, the back surface plate is formed at the back surface of the insertion piece at the L-shaped base part which supports the insertion piece formed with a tip end projected to be folded in the L shape, and when the above described locking claw part and the above described engaging hole engage with each other, the relationship between the length of the above described insertion piece and the space of the above described back surface plate and the above described restraining wall is such that the length of the above described insertion piece is longer than the above described space, whereby, even if the cover member bends by the external force and the above described insertion piece retreats, the above described restraining wall formed at the back surface side of the insertion piece abuts on the back surface plate of the L-shaped base part to restrain the above described insertion piece from retreating more, thus making it possible to prevent the engagement from releasing. Besides, in the above described U-shaped locking claw part, the relationship between the length of the hook piece projected from the tip end of the U-shaped base part, and the space of the back surface side of the hook piece at the U-shaped base part and the above described restraining wall is such that the length of the above described hook piece is longer than the above described space, whereby even if the above described cover member is bent by an external force and the above described insertion piece retreats, the above described restraining wall formed at the back surface side abuts on the back surface plate of the U-shaped base part to restrain the above described insertion piece from retreating more, thus making it possible to prevent the engagement from releasing.

The liquid crystal television including the locking means for the cover member according to claim 4 of the present invention is, in the liquid crystal television including the locking means for the cover member according to claim 3, characterized in that the aforesaid restraining walls are formed into frame shapes which surround the aforesaid insertion piece and hook piece.

According to the construction of claim 4, the above described restraining walls are formed into the frame shapes which surround the back surface sides and both side surface sides of the two kinds of locking claw parts with respect to the above described insertion piece and the above described hook piece, whereby, they function as the wall surfaces for guiding the fitting positions of the above described locking claw parts when the above described cover member is mounted, make up for the strength of the above described restraining wall in the locked state, and can restrain the engagement from releasing as the result of the locking claw part moves to the side surface side and the back surface side.

### BRIEF DESCRIPTION OF THE DRAWINGS

FIG. 1 is a perspective explanatory view of a state before mounting a cover member to a back casing seen from a lower side which shows one embodiment of the present invention.
FIG. 2 is a perspective explanatory view showing a front surface side of a liquid crystal television showing one embodiment of the present invention.
FIG. 3 is an explanatory view of a back surface of the liquid crystal television showing one embodiment of the present invention.
FIG. 4 is a perspective explanatory view showing an L-shaped locking claw part provided at one end side of a cover member and an engaging hole provided at a stepped recessed part wall surface of a back casing showing one embodiment of the present invention.
FIG. 5 is a perspective explanatory view showing a U-shaped locking claw part provided at the other end side of the cover member and an engaging hole provided in the stepped recessed part wall surface of the back casing showing one embodiment of the present invention.
FIG. 6 is a sectional explanatory view showing an engaging state of a locking claw part and an engaging hole in the state in which the cover member is mounted on the back casing showing one embodiment of the present invention.
FIG. 7 is a sectional explanatory view showing a state in which even when an external force is applied to the cover member and the locking claw part almost removes by bending, the restraining wall prevents slipping-off showing one embodiment of the present invention.
FIG. 8 is a sectional explanatory view showing a mounting structure of a cover member in a conventional battery case.
FIG. 9 is a perspective explanatory view of the state before mounting the cover member to the back casing in the conventional liquid crystal television which is seen from the lower side.
FIG. 10 is a perspective explanatory view showing an L-shaped locking claw part provided at one end side of a conventional cover member and an engaging hole provided at a stepped recessed part wall surface of a back casing.
FIG. 11 is a perspective explanatory view showing a U-shaped locking claw part provided at the other end side of the conventional cover member and an engaging hole provided in the stepped recessed part wall surface of the back casing.
FIG. 12 is a sectional explanatory view showing an engaging state of the locking claw part and the engaging hole in the state in which the conventional cover member is mounted to the back casing.
FIG. 13 is a sectional explanatory view showing the state in which an external force is applied to the conventional cover member and the locking claw part almost removes by bending.

### DETAILED DESCRIPTION OF THE PREFERRED EMBODIMENTS

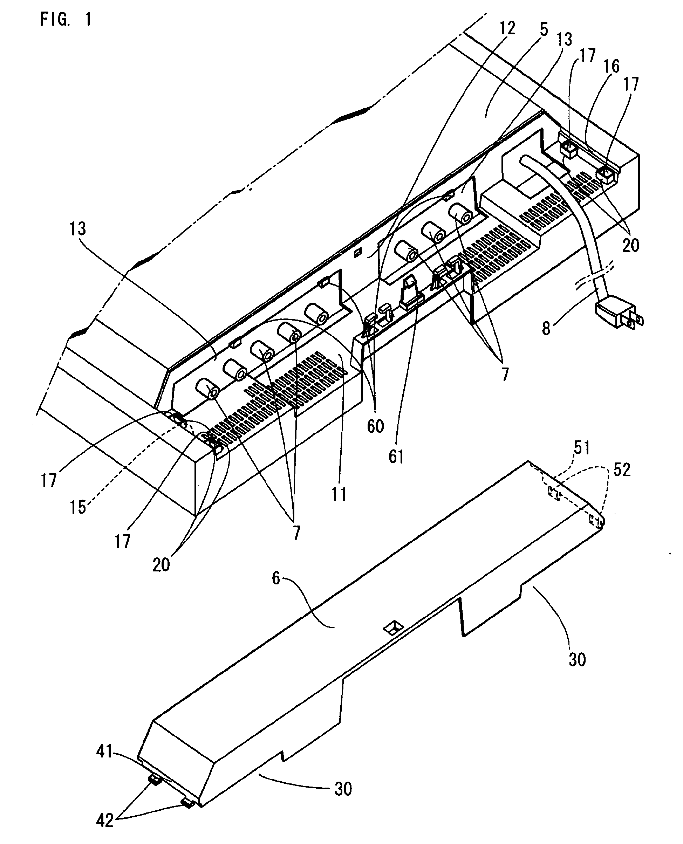

An embodiment as a best mode for carrying out the present invention will be described according to FIGS. 1 to 7 hereinafter. It goes without explaining that the present invention is also easily applicable to the other things than what is explained in the embodiment without departing from the spirit of the invention.

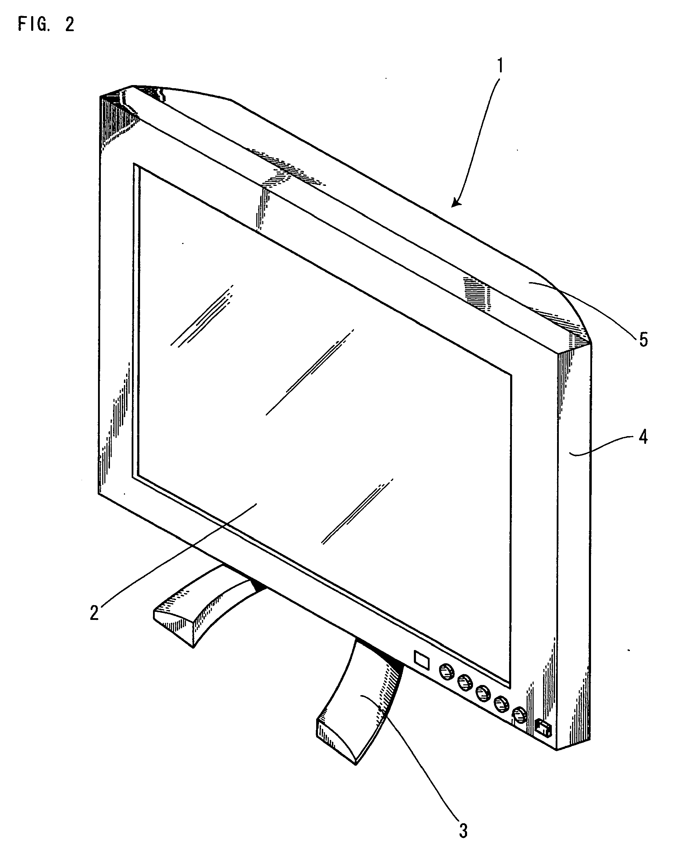

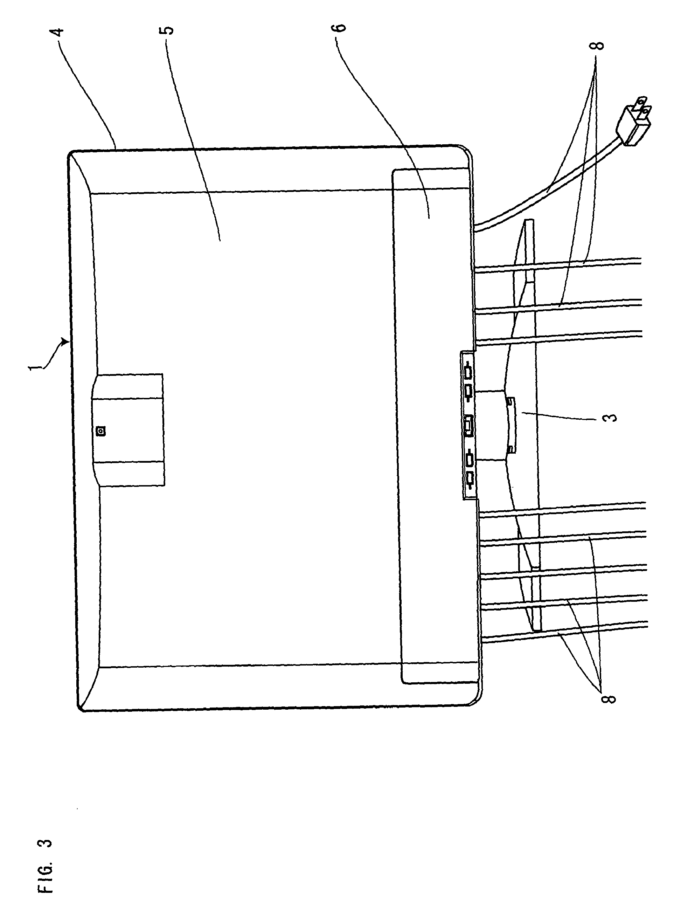

FIG. 1 is a partial explanatory view showing a schematic construction of a back casing and a cover member showing one embodiment in the present invention, and FIG. 2 is a perspective view which is the entire liquid crystal television seen from a front. FIG. 3 is a rear view of the liquid crystal television shown in FIG. 2 seen from a rear side.

In FIG. 2, a liquid crystal display 2 is disposed at a front surface of a casing 4 of a liquid crystal television 1, a stand 3 which supports a bottom side of the above described casing 4 is disposed, a back casing 5 shown in FIG. 3 is disposed at a back side of the above described casing 4, an oblong stepped recessed part not shown is formed at a lower side of the back casing 5, an open window not shown which makes it possible to dispose a plurality of input and output terminals not shown and cords 8 such as an electric power supply cord downward is formed at the stepped recessed part, and FIG. 3 shows a state in which the cords 8 are led out. Besides, in the liquid crystal television 1, the oblong cover member 6 which covers the above described step recessed part is disposed, and locking means for the cover member 6 which detachably lock both lateral ends of the cover member 6 and both lateral wall surfaces of the above described stepped recessed part are included.

Subsequently, an outline of the back casing 5 of the above described liquid crystal television 1 and the cover member 6 will be described with reference to FIG. 1. FIG. 1 is the state in which the above described oblong cover member 6 that covers the stepped recessed part 11 of the above described back casing 5 is removed, and this side in the drawing is the lower direction. Open windows 13 which make it possible to dispose a plurality of input and output terminals 7 and from which the power supply cord 8 is led out are opened in a downward wall surface 12 of the above described stepped recessed part formed to be oblong at the lower side of the above described back casing 5. Hamate hooks 60 which support the cover member 6 are disposed at the left and the right near the upper edge of the above described downward wall surface 12. A lever-shaped hook 61 which projects to be higher to support the above described cover member 6 from inside is formed at the lower side in the center of the above described stepped recessed part 11, that is, at this side in the drawing. Further, locking claw parts 42 and 52 which are projected to both lateral wall surfaces 15 and 16 sides of the above described stepped recessed part 11 from both the lateral ends 41 and 51 of the above described cover member 6 to be integrally formed with the cover member 6 are disposed at two spots at one end 41 side and at two spots at the other end 51 side. Engaging holes 17 which engage with the above described locking claw parts 42 and 52 are opened in both the lateral wall surfaces 15 and 16 of the above described stepped recessed part 11, which oppose the above described locking claw parts 42 and 52, to make engagement possible, and restraining walls 20, which restrain movement of the above described locking claw parts 42 and 52 in the engagement releasing direction after engagement of the above described locking claw parts 42 and 52 with the above described engaging holes 17, are projected from the above described stepped recessed surface 11 to be integrally formed into frame shapes, at the back sides of the above described locking claw parts 42 and 52.

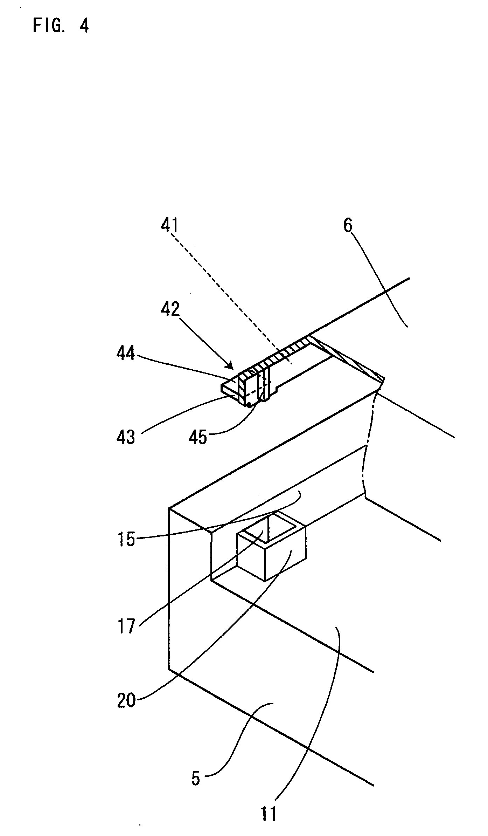

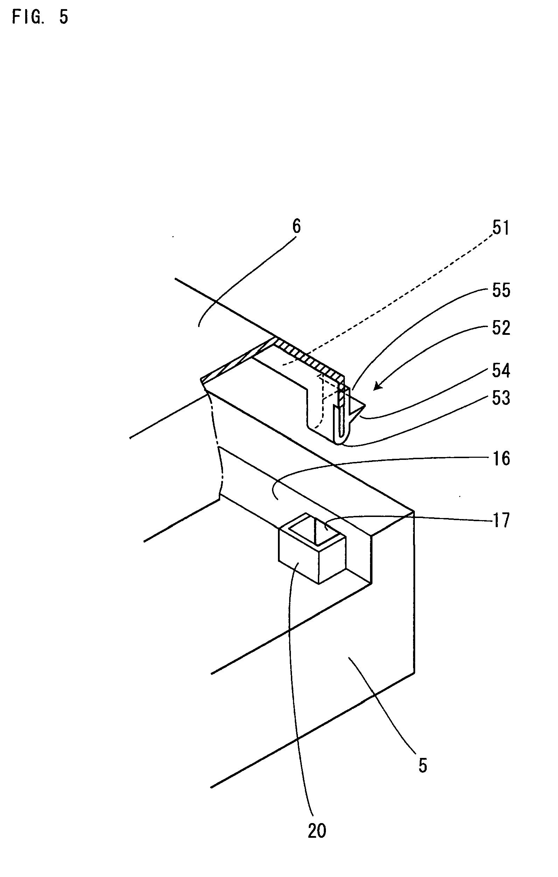

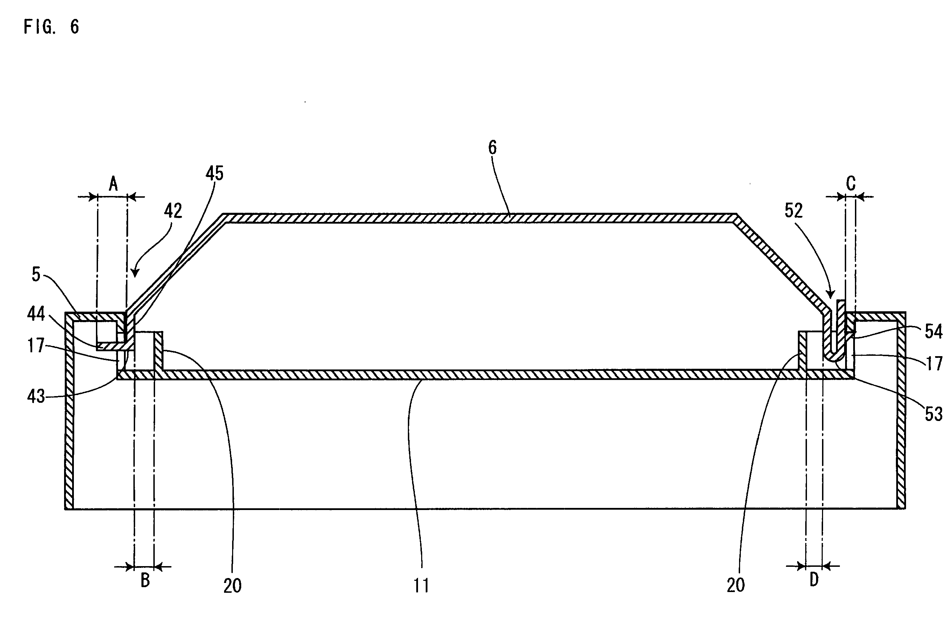

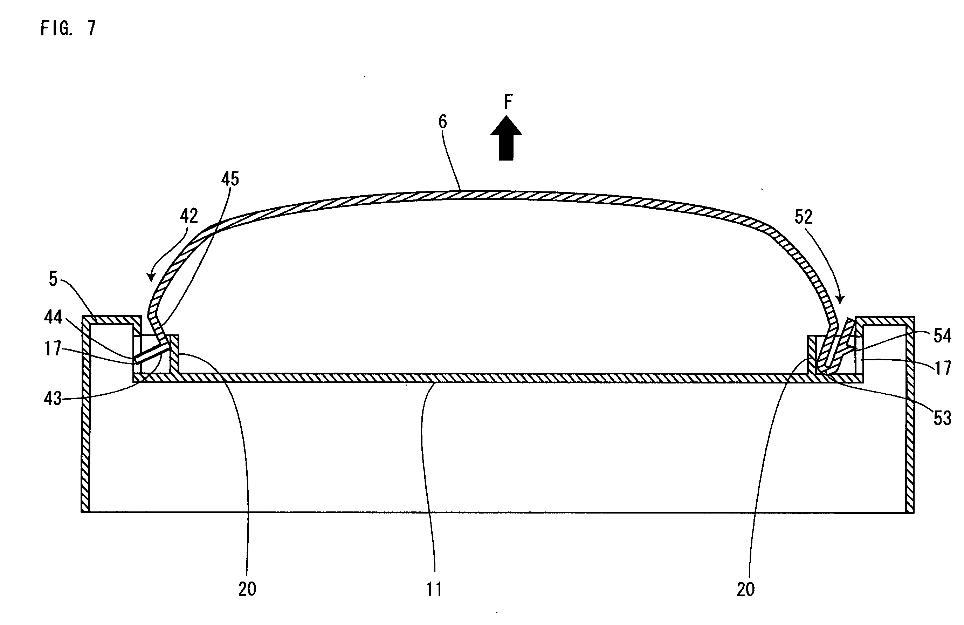

Subsequently, FIG. 4 is an enlarged perspective view including a partial section of an L-shaped locking claw part provided at one end side of the cover member in the present invention and an engaging hole provided in the stepped recessed part of the back casing, FIG. 5 is an enlarged perspective explanatory view including a partial section of the U-shaped locking claw part provided at the other end side of the cover member and the engaging hole provided in the stepped recessed part of the back casing. FIG. 6 is a sectional view showing the locking claw part when the cover member is mounted to the back casing, and is an explanatory view showing relationship between the length of the insertion piece and the hook piece and the space from the restraining wall provided at the back surface. FIG. 7 is an explanatory view showing the state in which the cover member bends as a result that an external force is applied to the cover member in the above described state in FIG. 6, and the restraining wall restrains removal of the locking claw part.

In FIG. 4, an insertion piece 44 which is an L-shaped base part 43 projected from the cover member 6 and folded into an L-shape is formed at the L-shaped locking claw part 42 provided near to the lower end edge of the cover member 6, and a back surface plate 45 is formed at a back surface of the above described L-shaped base part 43. Meanwhile, in the lateral wall surface 15 of the stepped recessed part 11 of the back casing 5, the engaging holes 17 are formed at the position opposing the above described L-shaped locking claw parts 42, and restraining walls 20 form frame-shaped walls facing to the above described engaging holes 17 adjacently to the engaging holes 17; and when the cover member 6 is mounted to the back casing 5, the other end side 51 at the U-shaped locking claw parts 52 side of the cover member 6 shown in FIG. 1 is carried to be widened and the insertion pieces 44 of the above-described L-shaped locking claw parts 42 are fitted into the engaging hole 17 from a diagonally upper direction, then the other end side 51 of the above described cover member 6 is lowered, whereby the L-shaped base part 43 can be easily fitted into a bosom of the above described frame-shaped restraining wall 20. When the above described cover member 6 is detached, the engagement at the side of the U-shaped locking claw part 52 is released in advance to carry the U-shaped locking claw part 52 side to be widened, whereby the above described insertion pieces 44 are pulled out in the diagonally upper direction with respect to the engaging holes 17 to be able to easily detach the cover member 6.

Besides, in FIG. 5, a U-shaped base part 53 projects from the cover member 6 to be folded in a U-shape at the U-shaped locking claw part 52 provided near the lower end edge of the cover member 6, and a hook piece 54 is formed near a U-shaped tip end part 55. Meanwhile, in the lateral wall surface 16 of the stepped recessed part 11 of the back casing 5, the engaging hole 17 is opened and formed at a position opposed to the above described U-shaped locking claw part 52, while the restraining wall 20 forms a frame-shaped wall to face the above described engaging hole 17 adjacently to the engaging hole 17, and after engagement is achieved at the above described L-shaped locking claw part 42 side, the U-shaped base part 53 of the U-shaped locking claw part 52 is positioned with the above described engaging hole 17 with the restraining wall 20 as a mark, and is slightly pushed, whereby the above described hook piece is fitted into the above described engaging hole 17 as a result the hook piece is given the above described spring characteristic, and the U-shaped base part 53 can be fitted into the bosom of the above described frame-shaped restraining wall 20 at the same time.

Next, the locking claw parts 42 and 52 when the cover member 6 is mounted to the back casing 5 will be described with reference to FIG. 6. The left side of the drawing is the one end side 41 of the cover member 6, and the L-shaped locking claw part 42 is engaged, with substantially entire length (A) of the insertion piece 44 fitted into the engaging hole 17 formed in the above described lateral wall surface 15, and is locked with a predetermined space (B) from the above described restraining wall 20 formed into the frame shape. Besides, the right side of the drawing is the other end side 51 of the cover member 6, and the U-shaped locking claw part 52 is engaged, with substantially entire length (C) of the hook piece 54 fitted into the engaging hole 17, while the U-shaped base part 53 given the spring characteristic is in pressure contact with the above described lateral wall surface 16. Further, by the above described restraining wall 20, the back surface of the U-shaped base part 53 is locked with a predetermined space (D) from the above described restraining wall 20 formed into the frame shape.

Here, preferable relationship between the lengths (A) and (C) of the above described two kinds of insertion piece 44 and hook piece 54 and the spaces (B) and (D) between the back surfaces of the base parts 43 and 53 of the above described two kinds of locking claw parts 42 and 52 and the above described restraining wall 20, which provides easiness in attaching and detaching operation of the cover member 6 and is difficult to remove even if an unexpected external force (F) is received in the above described two kinds of locking claw parts 42 and 52 will be described. When the lengths (A) and (B) are the same or the (A) is shorter than the (B) in the above described L-shaped locking claw part 42 side, the restraining wall 20 provided at the back surface abuts on the back surface plate 45 of the L-shaped base part 43 to be unable to restrain slipping-off, and when the cover member 6 bends significantly by the unexpected external force (F) as shown in FIG. 7, the force works in the direction in which the above described insertion piece 44 is diagonally lifted and widened from the above described engaging hole 17, therefore releasing engagement, and separating the cover member 6. Similarly in the above described U-shaped locking claw part 52 side, when the lengths (C) and (D) are the same, or the (C) is shorter than the (D), the restraining wall 20 provided at the back surface abuts on the back surface of the U-shaped base part 53 to be unable to restrain slipping-off, and when the cover member 6 bends significantly by the unexpected external force (F) as shown in FIG. 7, the force works in the direction in which the above described hook piece 54 is lifted and widened diagonally upward from the above described engaging hole 17, therefore releasing engagement and separating the cover member 6.

Accordingly, the preferable relationship between the lengths (A) and (C) of the above described two kinds of insertion piece 44 and hook piece 54 and the spaces (B) and (D) of the back surfaces of the base parts 43 and 53 of the above described two kinds of insertion piece 44 and hook piece 54 is the relationship (A) > (B) in which the length (A) of the insertion piece 44 is longer than the space (B) at the back surface side in the L-shaped locking claw part 42 side, while it is preferable that the relational expression (C) > (D) in which the length (C) of the hook piece 54 is longer than the space (D) at the back surface side is also established in the U-shaped locking claw part 52 side, and this relationship is secured, whereby even if the cover member 6 which is oblong and easily bends as shown in FIG. 7 receives deformation in the bending direction by the unexpected external force (F), the above described restraining wall 20 restrains the insertion piece 44 and the hook piece 54 from retreating and slipping off, and can prevent the cover member 6 from separating from the back casing 5.

As described above, according to the liquid crystal television including the locking means for the cover member 6 of the present invention, a structure which makes the above described cover member 6 manually attachable and detachable is provided by adopting the L-shaped locking claw part 42 and the U-shaped locking claw part 52 formed at both end parts 41 and 51 in the lateral direction of the cover member 6, in providing the stepped recessed part 11 at the lower side of the back casing 5 of the liquid crystal television 1, disposing the cover member 6 which is oblong, easily bends and covers the cords 8 for connecting the input and output terminals 7 disposed in the open windows 13 opened in the downward wall surface 12 of the stepped recessed part 11 and the external electronic devices not shown, and engaging and locking the cover member 6 with and at the above described back casing 5. First, in order to mount the cover member 6, the U-shaped locking claw part 52 side is carried and widened to be slant, the insertion piece 44 of the L-shaped locking claw part 42 is fitted and engaged, subsequently, the cover member 6 is made parallel with the back casing 5, after which, the U-shaped locking claw part 52 side is pressed to fit and engage the hook piece 54 into the engaging hole 17 which is formed by being opened in the lateral wall surface 16 of the stepped recessed part 11 provided in the above described back casing 5. Besides, when the cover member 6 is detached on the other hand, engagement of the hook piece 54 is released by picking up the U-shaped tip end side, subsequently, the U-shaped locking claw part 52 side of the above described cover member 6 is carried and widened to be slant, and the insertion piece 44 of the L-shaped locking claw part 42 is removed in the diagonal direction, whereby the above described cover member 6 can be simply and easily removed. The restraining walls 20 which prevent the above described locking claw parts 42 and 52 from slipping off from the above described engaging holes 17 by the unexpected external force (F) are newly formed and disposed, and the lengths (A) and (C) of the above described insertion piece 44 and the hook piece 54 are preferably made longer than the spaces (B) and (D) at the above described restraining wall 20 side respectively in the relationship of the lengths (A) and (C) of the above described insertion piece 44 and the hook piece 54 and the spaces (B) and (D) of the back surfaces of the above described locking claw parts 42 and 52 and the restraining walls 20, whereby the above described cover member 6 which is oblong and easy to bend can be prevented from bending by the external force (F) and separating, and therefore, the cords 8 which are led out from the lower side of the above described back casing 5 can be sufficiently protected.

Besides, it is possible to orderly arrange the above described cords 8 which are unified to be downward by the locking means of the above described cover member 6, and it is made possible to cover the area in the vicinity of the connecting parts of the above described cords 8 with the cover member 6, whereby beauty of the above described liquid crystal television 1 is enhanced, the liquid crystal television 1 is optionally disposed as the wall hanging type, or the stationary type by the stand 3 and can be comfortably watched and listened to.

This embodiment is described in detail above, but the present invention is not limited to the above described embodiment, and various modified embodiments can be made within the range of the spirit of the present invention. For example, the L-shaped locking claw parts 42 and the U-shaped locking claw parts 52 which are respectively formed at two spots at both the lateral end sides 41 and 51 of the cover member 6 are each not limited to two, but it is suitable if only the cover member 6 is in the state in which it can be prevented from removing by an external force, and disposition of the hamate hook 60 and the lever-shaped hook 61 is not limited to the above described embodiment and the number of dispositions and the positions may be changed in consideration of bendability of the cover member 6, and may be properly selected.

According to the invention of the liquid crystal television including the locking means for the cover member according to claim 1, the above described locking means for the cover member is constituted of a plurality of locking claw parts formed to project to both the above described lateral wall surface sides from both lateral ends of the above described cover member, and a plurality of engaging holes which are formed at the above described stepped recessed part to correspond to the locking claw parts, the locking means which locks the above described cover member at the above described back casing by the above described locking claw parts being fitted into the above described engaging holes to be engaged is included; and further, the restraining walls for restraining the movement of the above described locking claw parts in the engagement releasing direction after engagement of the above described locking claw parts and the above described engaging holes are integrally formed at the above described stepped recessed part, and thereby, even when the cover member which covers the above described oblong stepped recessed part, is oblong and easily bends is bent by unexpectedly receiving an external force and the above described locking claw parts are almost removed, the above described restraining wall formed at the back surface side of the above described locking claw part restrains the movement, whereby the above described cover member can be prevented from separating from the above described back casing as a result that the locking claw part removes from the engaging hole.

According to the invention of the liquid crystal television including the locking means for the cover member according to claim 2, the above described locking claw parts have the L-shaped insertion pieces at one end side of the above described cover member, and the U-shaped locking hook pieces having the spring characteristic formed at the other end side, whereby when the cover member is mounted to the above described back casing, the above described insertion pieces of the L-shape are fitted into the above described engaging holes first, then the above described hook pieces of the U-shape are fitted, and thereby, the above described cover member can be mounted more easily. Besides, the above described U-shaped locking claw part having the spring characteristic is in pressure contact with the edge surfaces of the above described engaging holes to reliably maintain engagement, while when the above described cover member is detached, the engagement can be easily released by releasing the engagement of the above described hook pieces of the U-shape first and thereafter, carrying and extending the locking claw part side of the U-shape and pulling out the insertion piece of the above described L-shape. Besides, the insertion piece and the hook piece are disposed at least near to the lower end edge of the above described cover member, the above described engaging hole in which the above described insertion piece is inserted to catch one end of the above described cover member and the above described engaging hole which locks at the hook piece to fix the cover are formed in the raised wall of the above described stepped recessed part, and the above described restraining wall is integrally formed to oppose the raised wall, whereby even when the area near to the lower end of the cover member which is oblong and especially easily bends is bent by unexpectedly receiving an external force and the above described locking claw part almost removes, the restraining wall formed at the back surface side of the above described locking claw part to oppose the above described raised wall restrains the movement, whereby the above described cover member can be prevented from separating from the above described back casing as a result that the locking claw part removes from the engaging hole.

According to the invention of the liquid crystal television including the locking means for the cover member according to claim 3, the height of the above described restraining wall substantially corresponds to the height of the upper part of the above described engaging hole, and thereby, when the cover member is in the locked state, the above described insertion piece and the above described hook piece are locked to be able to prevent the cover member from removing. Besides, in the above described L-shaped locking claw part, the back surface plate is formed at the back surface of the insertion piece at the L-shaped base part which supports the insertion piece formed with a tip end projected to be folded in the L shape, and when the above described locking claw part and the above described engaging hole engage with each other, the length of the above described insertion piece is longer than the space at the above described restraining wall side, whereby, even if the above described cover member bends by the external force and the above described insertion piece retreats, the above described restraining wall formed at the back surface side of the insertion piece abuts on the back surface plate of the L-shaped base part to restrain the above described insertion piece from retreating more, thus making it possible to prevent the engagement from releasing. Besides, in the above described U-shaped locking claw part, the length of the above described hook piece is longer than the space at the above described restraining wall side, whereby even if the above described cover member is bent by an external force and the above described insertion piece retreats, the above described restraining wall formed at the back surface side abuts on the back surface plate of the U-shaped base part to restrain the above described insertion piece from retreating more, thus making it possible to prevent the engagement from releasing and the cover member from separating.

According to the invention of the liquid crystal television including the locking means for the cover member according to claim 4, the above described restraining walls are formed into the frame shapes which surround the back surface sides and both side surface sides of the two kinds of locking claw parts with respect to the above described insertion piece and the above described hook piece, whereby, they function as the wall surfaces for guiding the fitting positions of the above described locking claw parts to thereby facilitate mounting of the cover member when the above described cover member is mounted, make up for the strength of the above described restraining wall in the locked state, and can restrain the locking claw part from moving to the side surface sides and the back surface side, thus making it possible to prevent the cover member from separating from the above described back casing as a result of receiving an unexpected external force.

## Claims

1. A liquid crystal television including locking means for a cover member comprising a liquid crystal display part disposed at a front surface of a casing, a stand attachable and detachable in a bottom surface of said casing, a back casing with an oblong stepped recessed part formed at a lower side, a plurality of input and output terminals and/or a power supply cord which are led out to an outside from open windows opened in a downward wall surface of said stepped recessed part, a cover member for covering said stepped recessed part, and locking means integrally formed at said cover member to detachably lock the cover member and said back casing, **characterized in that** said locking means comprises a plurality of locking claw parts formed integrally with the cover member to project to lateral wall surface sides of said stepped recessed part from both lateral ends of said cover member, and a plurality of engaging holes formed in said stepped recessed part to correspond to the locking claw parts, and restraining walls for restraining movement of said locking claw parts in an engagement releasing direction after engagement of said locking claw parts and said engaging holes are integrally formed at said stepped recessed part.

2. The liquid crystal television including the locking means for the cover member according to claim 1, **characterized in that** said locking claw part is constructed by an L-shaped insertion piece formed at one end side of said cover member, and a U-shaped hook piece formed at the other end side of said cover member and has a spring characteristic, these insertion piece and hook piece are disposed at least near a lower end edge of said cover member, said engaging hole in which said insertion piece is inserted to catch one end of said cover member, said engaging hole which is locked at the hook piece to fix the cover member are formed in raised walls of said stepped recessed part, and said restraining walls are integrally formed to oppose the raised walls.

3. The liquid crystal television including the locking means for the cover member according to claim 2, **characterized in that** height of said restraining wall substantially corresponds to height of an upper part of said engaging hole, a back surface plate is formed on a back surface of said L-shaped insertion piece, said insertion piece is formed to be longer than a space between said restraining wall and said back surface plate, and said hook piece is formed to be longer than a space between said restraining wall and a back surface of said U-shape.

4. The liquid crystal television including the locking means for the cover member according to claim 3, **characterized in that** said restraining wall is formed into a frame shape which surrounds said insertion piece and hook piece.
